# EUROPEAN PATENT SPECIFICATION

(11) **EP 3 939 696 B1**
(45) Date of publication and mention of the grant of the patent: **24.07.2024**
(21) Application number: 21170638.7
(22) Date of filing: 27.04.2021
(51) Int. Cl.: B01F 27/90, B01F 35/75, C08G 63/78, B01J 19/18

(54) **ECONOMIC AND ECO-FRIENDLY DYNAMIC MIXER**
WIRTSCHAFTLICHER UND UMWELTFREUNDLICHER DYNAMISCHER MISCHER
MÉLANGEUR DYNAMIQUE ÉCONOMIQUE ET ÉCOLOGIQUE

(30) Priority: 27.04.2020 IN 202021017970; 23.04.2021 IN 202021017970
(43) Date of publication of application: 19.01.2022
(73) Proprietor: SP Advanced Engineering Materials PVT. Ltd., Fort Mumbai Maharashtra 400023 (IN)
(72) Inventor: Mukherji, Arindam, 400 607 Maharashtra (IN); Wakure, Guruprasad Namdev, 413 509 Maharashtra (IN)
(74) Representative: Barker Brettell LLP

(56) References cited:
- DE-A1- 2 125 679
- GB-A- 415 695

## Description

### Technical field of the invention:

The present invention relates to the technical field of mixing devices, in particularly to a simple, an economic and eco-friendly dynamic mixer.

This mixer is developed to prepare the curative composition comprising substantially less curing agents in a proportion of 2.5:100 (a curing agent(s)/system: a resin system), thereby overcoming the proportion of the curing agent as well as number of curing agents to the resin system used in the existing art and making it very efficient. This mixer reduces undue gelling due to prolonged standing of formulated resin and thereby reduces jamming of the mixer and material loss due to gelling.

This mixer is developed to limit the predefined quantity of the homogenous mixing system and supply the curative composition at the desired place of the end application, thereby encountering negligible material loss in transit.

### Background of the Invention:

A dynamic mixer is a kind of high-efficiency mixing equipment that has moving parts. Its basic working mechanism is to mix the ingredients into a homogeneous mixture or to form a good dispersion.

DE 2125679 A1 discloses a device for mixing and discharging plastics material in accordance with the preamble of claim 1.

When the dynamic mixer is used to prepare curative composition by the addition of polymers or monomers with one or more curatives along with other suitable additives in bulk quantity then this composition is transferred to the desired place where curative composition needs to be deposited manually or through pipes.

One of the disadvantages is the spillage of the curative composition while transferring to the desired place. Another major disadvantage is that the composition may get cured, depending upon several factors, and the same can jam the mixer as well as block the outlet pipes. In such a situation, one needs to replace the mixer as well as outlet pipes, and this replacement causes major loss. There is also a restriction on the number and amount of curing agents used to prepare the curative composition in the dynamic mixer. To date, only one curing agent was used in the dynamic mixer and the proportion of the curing agent to the resin system used is 20:100.

### Objects of the invention:

In view of the above-mentioned drawbacks, the present invention proposes to provide a simple, an economic and eco-friendly dynamic mixer which will help to prepare the desired quantity of curative composition and provide an outlet to transfer the same to the desired place to avoid loss of material, and at the same time it will avoid jamming of the mixer.

Accordingly, the main object of the present invention is to provide a simple, an economic and an eco-friendly dynamic mixer which will help to prepare the desired quantity of curative composition and provide an outlet to transfer the resin mixture continuously to the desired place to avoid loss of material at the same time.

Another object of the present invention is to provide a simple, economic and eco-friendly dynamic mixer which will eliminate the spillage of the composition while transferring to the desired place.

Yet another object of the present invention is to provide a simple, economic and eco-friendly dynamic mixer which will eliminate undue gelling, thereby reducing jamming and reducing the material loss thereof.

Still another object of the present invention is to provide a continuous homogeneous composition.

Still another object of the present invention is to provide a simple, economic and eco-friendly dynamic mixer which will be less costly.

Still another object of the present invention is to provide a simple, economic and eco-friendly dynamic mixer, where the required human intervention is zero.

Still another object of the present invention is to provide a simple, economic and eco-friendly dynamic mixer, where two or more curing agents can be added to the curative composition without jamming, thereby eliminating the restriction on the number of curing agents to be used in the dynamic mixer to prepare the curative composition.

Still another object of the present invention is to provide a simple, economic and eco-friendly dynamic mixer, where the curative composition comprises substantially less curing agents in a proportion of 2.5:100 (a curing agent(s)/system: a resin system), thereby overcoming the restriction on the proportion of the curing agent to the resin system used in the existing art and making it very efficient.

An additional object of the invention is to provide a simple, an economic and eco-friendly dynamic mixer, wherein the mixer follows two-part mixing principle by dividing components into a part (A) as a resin system and a part (B) as a curing system; said curing system comprises at least one curing agent along with a suitable additive including mould release agent; said resin system comprises at least one resin along with a suitable additive and a filler; and fed into the mixer to achieve curative composition comprising at least 2.5 phr curing system (B) per resin system.

### Summary of the invention:

The invention provides a dynamic mixer as defined in claim 1, the use of a dynamic mixer to obtain a homogenous curative composition as defined in claim 12, and a method of obtaining a homogenous curative composition as defined in claim 13.

### Brief description of the accompanying drawings:

Figure 1 illustrates the schematic structural diagram of an example of the simple, economic and eco-friendly dynamic mixer of the present invention.
Figure 2 illustrates the schematic structural diagram of a master tank, which is described but not claimed, which can be used to store the curative composition/ liquid composition.
Figure 3 illustrates the exploded view of an example of the stirring chamber with the stirrer and the siphon with critical dimensions.

### Detailed description of the invention:

The present invention is described in more detail below; it is to be understood that this invention is not limited to particular embodiments, drawings, methodologies and materials described, as these may vary as per the person skilled in the art. It is also to be understood that the terminology used in the description is for the purpose of describing the particular embodiments only and is not intended to limit the scope of the present invention. The scope of the invention is defined by the claims.

Before the present invention is described, it is to be understood that unless defined otherwise, all technical and scientific terms used herein have the same meaning as commonly understood by one of ordinary skill in the art to which this invention belongs. Further, it is to be understood that the present invention is not limited to the preferred methods and materials that are described, as these may vary within the specification indicated; the methodologies and materials similar or equivalent to those described herein can be used in the practice or testing of the present invention. Unless stated to the contrary, any use of the words such as "including," "containing," "comprising," "having" and the like, means "including without limitation" shall not be construed to limit any general statement that it follows to the specific or similar items or matters immediately following it. Embodiments of the invention are not mutually exclusive, but may be implemented in various combinations. The described embodiments of the invention and the disclosed examples are given for the purpose of illustration rather than limitation of the invention as set forth in the appended claims. Further, the disclosed embodiments are merely exemplary methods of the invention, which may be embodied in various forms.

It is also to be understood that the terms "a", "an", "the" and like are words for the sake of convenience and are not to be construed as limiting terms. Moreover, it will be understood that the illustrations are for the purpose of describing a particular exemplary embodiment of the invention and are not limited to the invention thereto.

The term "resin system" intends to cover a system comprising a resin along with at least one suitable additive and a filler.

The term "curative system" intends to cover a system comprising at least one curing agent along with at least one suitable additive including mould release agent.

The term "curative composition" is also called as a "formulated resin composition" and it intends to cover the homogenous composition obtained after mixing the resin system with the curative system.

The term "phr" means parts per hundred resin or resin system.

All amounts given are by weight (e.g. parts by weight), unless indicated otherwise.

In order to solve the problems like jamming of the dynamic mixer itself and/or the outlets of the mixer and thereby replacing the entire mixer and/or the outlet pipes with new one, the present invention provides a simple, an economic and an eco-friendly dynamic mixer which will help to prepare the desired quantity of curative composition and provide the outlet to transfer the mixture at the desired place to avoid loss of material at the same time. It also eliminates the spillage of the curative composition while transferring to the desired place. It eliminates jamming and loss and thus makes it less costly. It eliminates the restriction on number of curing agents used and substantially decreases the amount of curing agents used.

The invention is as defined in the claims.

The invention provides a dynamic mixer as defined in the claims. The dynamic mixer of the invention is suitable for mixing at least one curing system and at least one resin system in a proportion of at least 2.5:100 to obtain a homogenous curative composition.

The invention also provides the use of the dynamic mixer of the invention, as defined in the claims. In this regard, the dynamic mixer of the invention can be used for mixing at least one curing system and at least one resin system in a proportion of at least 2.5:100 to obtain a homogenous curative composition.

The invention also provides a method of obtaining a homogenous curative composition, as defined in the claims. In this regard, the method comprises:
a) providing a dynamic mixer according to the invention;
b) using the first pumping means to pump at least one curing system to the stirring chamber through the first inlet hose at a speed of 0.1 to 0.2 liter /minute;
c) using the second pumping means to pump at least one resin system to the stirring chamber through the second inlet hose at a speed of 3.4 to 3.55 litre/minute;
d) mixing the curing system and the resin system in the chamber (5) with a residence time in the range of 40 to 67 seconds; and then
e) siphoning out the resultant homogenous composition at 3 to 4 liter /minute.

The dynamic mixer according to the claimed invention is suitable for mixing at least one curing system and at least one resin system in a proportion of at least 2.5:100 to obtain a homogenous curative composition. Said mixer comprises: (a) a stirring chamber provided with a motorised stirrer suspended from the top of the chamber and a siphon at the bottom of the chamber; (b) at least a first inlet hose, wherein said first inlet hose is connected to the stirring chamber at one end and is connected to a first pumping means at other end; wherein the first pumping means are configured to, in use, pump at least one curing system to the stirring chamber through the at least one inlet hose; (c) at least a second inlet hose, wherein said second inlet hose is connected to the stirring chamber at one end and is connected to a second pumping means at other end; wherein the second pumping means are configured to, in use, pump at least one resin system to the stirring chamber through the at least one inlet hose; and (d) a frame. The proportion of (A) the diameter of the stirring chamber: (B) the length of the stirring chamber: (C) the length from the bottom opening of the chamber to the top of the siphon, is in the ratio of 1: (2.6-3.0): (1.1-1.3), and the length (C) from the bottom opening of the chamber to the top of the siphon is from 138 to 162 mm.

Typically, one arm of the siphon is connected to stirring chamber at one end and other arm of the siphon is connected to an outlet pipe at the other end.

Typically, the driving system of the stirrer may be mechanical including means to drive the wheel like shaft, driver, etc. or may be an automated driving system.

Typically, the pumping means includes all types of pumps of suitable capacity for the application. The pumps used in the invention are suitably gear pumps and variable frequency drive attached to it in order to vary the discharge independently in order to obtain different mixing ratios.

Typically, the outlet pipe connected to the siphon dispenses the curative composition to a master tank through the primary dispensing port. The master tank comprises of several small dimensional portable tanks. Each portable tank is connected to the sub-dispensing inlet port of predefined height. All the portable tanks are connected through the multiple sub-dispensing inlet ports to a primary dispensing port. All portable tanks are arranged at predefined intermittently elevated heights.

Alternatively, the length of the outlet pipe at other end of the siphon is suitable to reach the place where the curative composition is used.

Alternatively, the curative composition from the stirring chamber will be transferred through the outlet pipe manually at the desired place of use.

The dynamic mixer of the invention follows the two-part mixing principle by dividing components into the part (A) as the resin system and the part (B) as the curing system, said curing system comprises at least one curing agent along with a suitable additive including mould release agent; said resin system comprises at least one resin along with a suitable additive and a filler; and fed into the mixer to achieve curative composition comprising at least 2.5 phr curing system (B) per resin system.

In one of the embodiments of the invention, the desired quantities of at least one resin system and at least one curing system are added through inlet hoses connected to the stirring chamber through pumping means and the combined content of the resin system(s) and the curing system(s) in the stirring chamber is always maintained at the level of the siphon's height. The siphon level is typically maintained at 1/3^{rd} of the stirring chamber. It is very important to maintain the level of the content of the stirring chamber to that of the siphon level in order to make a consistent and continuous supply of the curative mixture at the desired place and if there is jamming at all, due to curing in the process, then the loss is minimal.

The resin system (Part A) comprises at least one resin, a suitable additive and filler.

The curing system (Part B) comprises at least one curing agent and a suitable additive including mould release agent.

In another embodiment of the dynamic mixer of the invention, there is a provision in the present invention to pump more than one curing agents by increasing the number of inlet hoses connected to the stirring chamber through pumping means to pump the curing agents to the chamber and to prepare the curative composition.

Typically, the dynamic mixer of the present invention can pump five different curing agents through five inlet hoses in the stirring chamber through pumping means to prepare the curative composition.

In another embodiment of the dynamic mixer of the invention, there is a provision in the present invention to pump more than one resin systems by increasing the number of inlet hoses connected to the stirring chamber through pumping means to pump the curing agents to the chamber and to prepare the curative composition.

Typically, in the dynamic mixer of the present invention, at least one curing agent and at least one resin system is pumped into the stirring chamber through the inlets through pumping means in the proportion of at least 2.5:100. At such a low concentration, the uniform mixing is carried out in the dynamic mixer of the invention to produce the curative composition.

In another embodiment of the dynamic mixer of the invention, the curing agents and the resin system can be replaced by any number of liquid components, particularly at least five liquid components to be added to the dynamic mixer.

Typically, in the dynamic mixer of the present invention, at least five liquid components are pumped into the stirring chamber through the inlets, through pumping means, in a proportion where at least one of the liquid components used is at least 2.5 phr per composition. At such low concentrations, the uniform mixing is carried out in the dynamic mixer of the invention to produce the homogeneous composition without spillage or loss due to jamming.

In the claimed method, the curing system and resin system is pumped into the chamber by the first and second pumping means through first and second inlet hoses at a speed of 0.1 to 0.2 liter /minute and 3.4 to 3.55 liter/minute respectively.

In the claimed method, the curing system and the resin system are mixed in the chamber (5) with a residence time in the range of 40 to 67 seconds.

In the claimed method, the curative composition or homogeneous composition is siphoned out from the chamber through outlet hose at 3 to 4 liter /minute.

### Detailed description of the accompanying drawings:

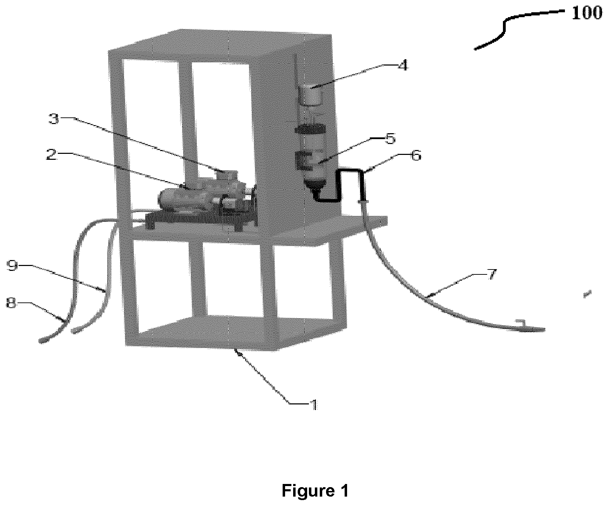

Figure 1 illustrates the schematic structural diagram of an example of the simple, economic and eco-friendly dynamic mixer of the present invention. The dynamic mixer (100) consists of a first inlet hose (8) for the curing system, a first pumping means (2) to pump the curing system, a second inlet hose (9) for the resin system, a second pumping means (3) to pump the resin system, stirrer (4), stirring chamber (5), siphon (6) and outlet pipe (7) to discharge the curative composition. The dynamic mixer is fitted into the frame (1). The dynamic mixer (100) comprises a stirring chamber (5), a stirrer (4) suspended from the top of the chamber (5) and connected to top closure of the chamber (5) and a siphon (6) connected at the bottom of the chamber. The arm (6a) of the siphon (6) is connected to the stirring chamber (5) at one end and other arm (6b) of the siphon (6) is connected the outlet pipe (7) at the other end to discharge the curative composition. The stirring chamber (5) is also connected to an inlet hose (8) through a pumping means (2) and an inlet hose (9) through a pumping mean (3) to pump the curing system and the resin system respectively. The dynamic mixer (100) of the present invention is fitted into the frame (1) to setup the dynamic mixer.

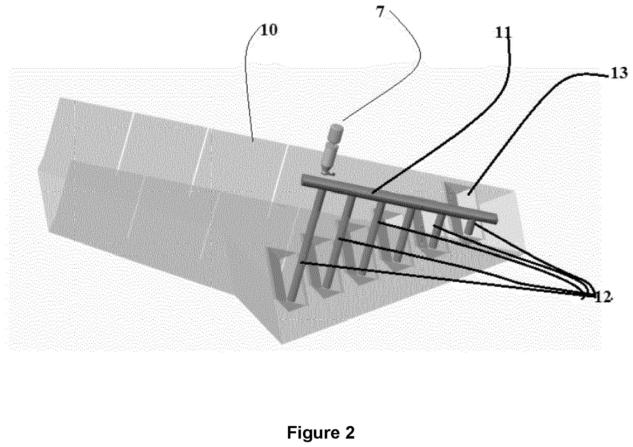

Figure 2 illustrates the schematic structural diagram of a master tank that is described but not claimed. This master tank can be used to store a curative composition/ liquid composition that has been mixed in the dynamic mixer of the invention. The outlet pipe (7) which dispenses the curative composition is connected to a master tank (10) through a primary dispensing port (11). The master tank comprises several small dimensional portable tanks (13). Each portable tank (13) is connected to the sub-dispensing inlet port (12) of predefined height. All the portable tanks (13) are connected through the multiple sub-dispensing inlet ports (12) to the primary dispensing port (11). All portable tanks are arranged at predefined intermittently elevated heights.

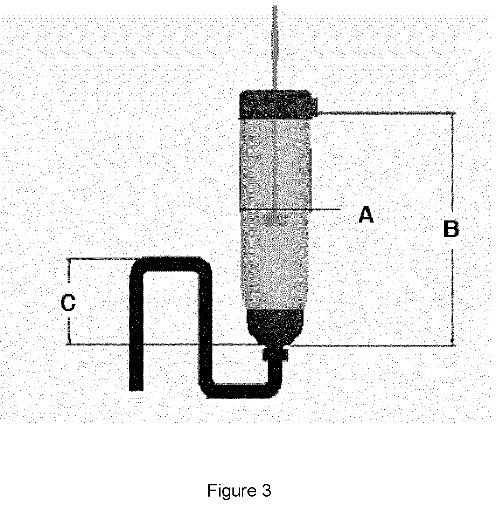

Figure 3 illustrates an exploded view of an example of the stirring chamber (5) with the stirrer (4) and the siphon (6), with critical dimensions, of the simple, economic and eco-friendly dynamic mixer of the present invention. The dimensions including the diameter (A) of the stirring chamber (4), length (B) of the stirring chamber (5) from a top closure to a bottom opening of the chamber (4), and length (C) from the bottom opening of the chamber (5) and a top of the siphon (6) are very critical to
   1) facilitate the preparation of the homogeneous curative composition comprising substantially less amounts of curing system in a proportion of 2.5:100 (curing agent(s)/system: resin system);
   2) facilitate the mixing of at least two liquid components by replacing the curing system and the resin system in the proportion 2.5:100 to prepare the homogeneous composition; and
   3) facilitate the mixing of at least five liquid components where at least one of the liquid components is used at least 2.5 phr and at such low concentration, the uniform mixing is carried out in the dynamic mixer of the invention to produce the homogeneous composition which is otherwise difficult to mix.

In the claimed invention, the proportion of diameter (A) of the stirring chamber (5); length (B) of the stirring chamber (5) from a top closure to a bottom opening of the chamber (5); and the length (C) from the bottom opening of the chamber (5) and a top of the siphon (6) may vary only in the ratio of 1:(2.6-3.0):(1.1-1.3) i.e. [(A): (B): (C)] to obtain the homogenous curative composition comprising 2.5 phr curing system per resin system.

For example:
Typically, the diameter (A) of the stirring chamber (5) is 125 mm.

Typically, the length (B) of the stirring chamber (5) from a top closure to a bottom opening of the chamber (5) is 322 to 378 mm.

In the claimed invention, the length (C) from the bottom opening of the chamber (5) and a top of the siphon (6) is 138 to 162 mm.

If the length (C) from the bottom opening of the chamber (4) and a top of the siphon (6) is greater than that of 162 mm, then mixture present in the chamber is not mixed properly and gets overflowed from the chamber.

However, if the length (C) from the bottom opening of the chamber (4) and a top of the siphon (6) is lesser than that of 138 mm, then mixture present in the chamber is again not mixed properly and siphoned out from the chamber before homogeneous mixing.

It is observed that if the proportion of diameter (A), length (B) and length (C) changed other than that of mentioned critical ratio, then the desired results as claimed were not achieved.

Accordingly, the present invention provides the simple, economic and eco-friendly dynamic mixer which prepares the desired quantity of curative composition, and it has an outlet to transfer the composition at the desired place to avoid loss of material during transit. It eliminates the spillage of the curative composition while transferring to the desired place. It also eliminates jamming and thus eliminates the material loss thereof. It completely eliminates the human intervention in the manufacturing of the curative composition and dispensing thereof at desired places. The present invention allows using two or more curing agents to prepare the curative composition without jamming, thereby eliminating the restriction on the number of curing agents used in the dynamic mixer to prepare the curative composition. The dynamic mixer of the present invention facilitates the preparation of the curative composition comprising substantially less amounts of curing agents in a proportion of 2.5:100 (curing agent(s)/system: resin system), thereby overcoming the proportion of the curing agent to the resin system used in the existing art and making it very efficient. The present dynamic mixer of the invention also facilitates mixing of at least two liquid components by replacing the curing agents and the resin system in the proportion 2.5:100 to prepare the homogeneous composition. It also facilitates mixing of at least five liquid components where at least one of the liquid components is used at least 2.5 phr. At such low concentration, the uniform mixing is carried out in the dynamic mixer of the invention to produce the homogeneous composition which is otherwise difficult to mix.

Thus, the dynamic mixer eliminated or substantially reduced the problems associated with the prior art, thereby making the mixer less costly i.e. economic, eco-friendly and efficient.

### Best Mode or Examples for Working of the Invention

The present invention is described in the examples given below; further these are provided only to illustrate the invention and therefore should not be construed to limit the scope of the invention. The scope of the invention is defined by the claims.

### Examples 1 to 5:

The curative compositions were prepared according to the components and the formulations as disclosed in the Table 1 and Table 2 respectively.

**Table 1: Components used in the curative composition**

| **Sr. No.** | **Components** | **Amount** |
|---|---|---|
| 1 | Part A | |
| | Resin system | |
| 1a | Polyester Resin (Netpol^{™} 1011) | 100 Parts |
| 1b | CaCO₃ (filler) | 2.66 PHR |
| 2 | Part B | |
| | Curing system | |
| 2a | TBPB | 1.4 PHR |
| 2b | Release Oil (mould release agent) | 1.2 PHR |
| 2c | BPO | 0.933 PHR |

**Table 2: Formulations of the curative composition**

| **Examples** | **Formulations** | | |
|---|---|---|---|
| | **Part A Amount discharged in the chamber liter/minute** | **Part B Amount discharged in the chamber liter/minute** | **Part A: Part B Proportion** |
| **1** | **3.44** | **0.13** | **100: 3.78** |
| **2** | **3.51** | **0.15** | **100:4.27** |
| **3** | **3.96** | **0.10** | **100:2.53** |
| **4** | **3.5** | **0.12** | **100: 3.43** |
| **5** | **3.43** | **0.16** | **100: 4.66** |

The formulations were prepared by mixing the part A and part B pumping into the chamber through inlet hoses and pumping means at the rate (liter/minute) indicated in Table 2 by using dynamic mixer. The chamber (5) of the dynamic mixer (100) had a diameter (A) of 125 mm. The length (B) of the stirring chamber (5) from a top closure to a bottom opening of the chamber (5) of the mixer was 350 mm. The length (C) from the bottom opening of the chamber (5) and a top of the siphon (6) of the mixer was 150 mm. The ratio of diameter (A): length (B): length (C) was 1: 2.8: 1.2. The residence time of the curing system and the resin system in chamber (5) was 40 to 67 seconds. The curative composition was siphoned out at rate of 3.56 liter / minute from the mixer through outlet hose and the composition was found to be a homogeneous composition. The composition was tested every 15 minutes with Differential Scanning Calorimeter (DSC) machine for its homogeneity by monitoring heat of reaction in the phase transition and it was found to be similar. Thus, the compositions of examples 1 to 5 obtained were found to be homogenous.

### Comparative Example 6:

The formulation according to example 1 was prepared by mixing the part A and part B pumping into the chamber though inlet hoses and pumping means at the rate (liter/minute) indicated in Table 2 by using dynamic mixer. The chamber (5) of the dynamic mixer (100) had a diameter (A) of 125 mm. The length (B) of the stirring chamber (5) from a top closure to a bottom opening of the chamber (5) of the mixer was 350 mm. The length (C) from the bottom opening of the chamber (5) and a top of the siphon (6) of the mixer was increased to 164 mm. The ratio of dimeter (A): length (B): length (C) was 1: 2.8: 1.31. We have observed that the mixture overflowed from the chamber and the curative composition siphoned out from the mixer was not a homogeneous composition.

### Comparative Example 7:

The formulation according to example 1 was prepared by mixing the part A and part B pumping into the chamber though inlet hoses and pumping means at the rate (liter/minute) indicated in Table 2 by using dynamic mixer. The chamber (5) of the dynamic mixer (100) had a diameter (A) of 125 mm. The length (B) of the stirring chamber (5) from a top closure to a bottom opening of the chamber (4) of the mixer was 360 mm. The length (C) from the bottom opening of the chamber (5) and a top of the siphon (6) of the mixer was decreased to 136 mm. The ratio of diameter (A): length (B): length (C) was 1: 2.88: 1.09. The mixture from the chamber was siphoned out quickly and the curative composition siphoned out from the mixer was not a homogeneous composition.

### Example 8:

The formulation according to example 1 was prepared by mixing the part A and part B pumping into the chamber though inlet hoses and pumping means at the rate (liter/minute) indicated in Table 2 by using dynamic mixer. The critical parameters of the dynamic mixer (100) were modified. The diameter (A) of the chamber (5) was 125 mm. The length (B) of the stirring chamber (5) from a top closure to a bottom opening of the chamber (5) was 350 mm and the length (C) from the bottom opening of the chamber (5) and a top of the siphon (6) was 140 mm. The ratio of diameter (A): length (B): length (C) was 1: 2.8: 1.12. The residence time of the curing system and the resin system in chamber (5) was 40 to 67 seconds. The curative composition was siphoned out at rate of 3.56 liter / minute from the mixer through outlet hose and the composition was found to be a homogeneous composition. The composition was tested every 15 minutes with Differential Scanning Calorimeter (DSC) machine for its homogeneity by monitoring heat of reaction in the phase transition and it was found to be similar. Thus, the composition was found to be homogenous.

It was found that if the proportion of (A), (B) and (C) is in ratio of 1: (2.6-3.0): (1.1-1.3) then only the mixer facilitates the preparation of the homogeneous curative composition comprising substantially less amounts of curing agents/system in a proportion of 2.53 to 4.66: 100 (curing system: resin system), which was otherwise difficult to mix.

Thus, the present invention has following advantages:
1) The simple, economic and eco-friendly dynamic mixer which prepares the desired quantity of curative composition and it has an outlet to transfer the composition at the desired place to avoid loss of material during transit.
2) It eliminates the spillage of the curative composition while transferring to the desired place.
3) It completely eliminates the human intervention in the manufacturing of the curative composition and dispensing thereof at desired places.
4) It also eliminates jamming and thus eliminates the material loss thereof.
5) The present invention allows using two or more curing agents to prepare the curative composition without jamming thereby eliminating the restriction on the number of curing agents used in the dynamic mixer to prepare the curative composition.
6) The present dynamic mixer of the invention also facilitates mixing of at least two liquid components by replacing the curing system and the resin system in the proportion 2.5:100 to prepare the homogeneous composition.
7) It also facilitates mixing of at least five liquid components where at least one of the liquid components is used at least 2.5 phr. At such low concentration, the uniform mixing is carried out in the dynamic mixer of the invention to produce the homogeneous composition which is otherwise difficult to mix.

## Claims

1. A dynamic mixer (100) suitable for mixing at least one curing system and at least one resin system in a proportion of at least 2.5:100 to obtain a homogenous curative composition, wherein said mixer comprises:
a) a stirring chamber (5) provided with a motorised stirrer (4) suspended from the top of the chamber (5) and a siphon (6) at the bottom of the chamber;
b) at least a first inlet hose (8), wherein said first inlet hose is connected to the stirring chamber at one end and is connected to a first pumping means (2) at other end; wherein the first pumping means (2) are configured to, in use, pump at least one curing system to the stirring chamber through the at least one inlet hose (8);
c) at least a second inlet hose (9), wherein said second inlet hose is connected to the stirring chamber at one end and is connected to a second pumping means (3) at other end; wherein the second pumping means (3) are configured to, in use, pump at least one resin system to the stirring chamber through the at least one inlet hose (9); and
d) a frame (1);
**characterized in that**
the proportion of (A) the diameter of the stirring chamber (5): (B) the length of the stirring chamber (5): (C) the length from the bottom opening of the chamber (5) to the top of the siphon (6), is in the ratio of 1: (2.6-3.0): (1.1-1.3), and **in that**
the length (C) from the bottom opening of the chamber (5) to the top of the siphon (6) is from 138 to 162 mm.

2. The dynamic mixer as claimed in claim 1, wherein the siphon (6) has a first arm (6a) that is connected to the stirring chamber (5) at a first end and wherein the siphon (6) has a second arm (6b) that is connected to an outlet pipe (7) at a second end, wherein said outlet pipe (7) is configured to, in use, discharge the curative composition.

3. The dynamic mixer as claimed in claim 2, wherein the outlet pipe (7) is configured to, in use, dispense the curative composition to a master tank through a primary dispensing port.

4. The dynamic mixer as claimed in claim 3, wherein the master tank comprises several smaller-dimensioned portable tanks, wherein said portable tanks are each connected to a sub-dispensing inlet port.

5. The dynamic mixer as claimed in claim 4, wherein said portable tanks are connected through multiple sub-dispensing inlet ports to a primary dispensing port; and wherein said portable tanks may be arranged at intermittently elevated heights.

6. The dynamic mixer as claimed in any one of the preceding claims, wherein the stirrer has a driving system, which may be a mechanical driving system, and may include means to drive a wheel, such as a shaft or driver, or which may be an automated driving system.

7. The dynamic mixer as claimed in any of the preceding claims, wherein the mixer is configured such that, in use, the curing system is pumped into the chamber by the first pumping means through the first inlet hose at a speed of 0.1 to 0.2 liter /minute and the resin system is pumped into the chamber by the second pumping means through the second inlet hose at a speed of 3.4 to 3.55 litre/minute.

8. The dynamic mixer as claimed in any of the preceding claims, wherein the mixer is configured such that, in use, the curative composition or homogeneous composition is siphoned out from the chamber through outlet pipe at 3 to 4 liter /minute.

9. The dynamic mixer as claimed in any of the preceding claims; wherein the mixer is configured such that, in use, the curing system and the resin system are mixed in the chamber (5) with a residence time in the range of 40 to 67 seconds before then siphoning out the homogenous composition.

10. The dynamic mixer as claimed in any of the preceding claims, wherein the diameter (A) of the stirring chamber (5) is 125mm.

11. The dynamic mixer as claimed in any of the preceding claims, wherein the length (B) of the stirring chamber (5) from a top closure to a bottom opening of the chamber (5) is from 322 to 378 mm.

12. The use of the dynamic mixer as defined in any one of the preceding claims for mixing at least one curing system and at least one resin system in a proportion of at least 2.5:100 to obtain a homogenous curative composition.

13. A method of obtaining a homogenous curative composition, the method comprising:
a) providing a dynamic mixer as defined in any one of claims 1-11;
b) using the first pumping means to pump at least one curing system to the stirring chamber through the first inlet hose at a speed of 0.1 to 0.2 liter /minute;
c) using the second pumping means to pump at least one resin system to the stirring chamber through the second inlet hose at a speed of 3.4 to 3.55 litre/minute;
d) mixing the curing system and the resin system in the chamber (5) with a residence time in the range of 40 to 67 seconds; and then
e) siphoning out the resultant homogenous composition at 3 to 4 liter /minute.

## Patentansprüche

1. Dynamischer Mischer (100), der zum Mischen mindestens eines Härtungssystems und mindestens eines Harzsystems in einem Verhältnis von mindestens 2,5:100 zum Erhalten einer homogenen härtenden Zusammensetzung geeignet ist, wobei der Mischer Folgendes umfasst:
a) eine Rührkammer (5), die mit einer motorisierten Rührvorrichtung (4), die an der Oberseite der Kammer (5) aufgehängt ist, und einem Siphon (6) an der Unterseite der Kammer versehen ist;
b) mindestens einen ersten Einlassschlauch (8), wobei der erste Einlassschlauch an einem Ende mit der Rührkammer verbunden ist und am anderen Ende mit einem ersten Pumpmittel (2) verbunden ist; wobei die ersten Pumpmittel (2) dazu ausgelegt sind, in Verwendung mindestens ein Härtungssystem durch den mindestens einen Einlassschlauch (8) zu der Rührkammer zu pumpen;
c) mindestens einen zweiten Einlassschlauch (9), wobei der zweite Einlassschlauch an einem Ende mit der Rührkammer verbunden ist und am anderen Ende mit einem zweiten Pumpmittel (3) verbunden ist; wobei die zweiten Pumpmittel (3) dazu ausgelegt sind, in Verwendung mindestens ein Harzsystem durch den mindestens einen Einlassschlauch (9) zu der Rührkammer zu pumpen; und
d) einen Rahmen (1);
**dadurch gekennzeichnet, dass**
das Verhältnis von (A) dem Durchmesser der Rührkammer (5): (B) der Länge der Rührkammer (5): (C) der Länge von der unteren Öffnung der Kammer (5) zur Oberseite des Siphons (6) im Verhältnis von 1: (2,6-3,0): (1,1-1,3) steht, und
dadurch, dass
die Länge (C) von der unteren Öffnung der Kammer (5) zur Oberseite des Siphons (6) von 138 bis 162 mm beträgt.

2. Dynamischer Mischer nach Anspruch 1, wobei der Siphon (6) einen ersten Arm (6a) aufweist, der an einem ersten Ende mit der Rührkammer (5) verbunden ist, und wobei der Siphon (6) einen zweiten Arm (6b) aufweist, der an einem zweiten Ende mit einem Auslassrohr (7) verbunden ist, wobei das Auslassrohr (7) dazu ausgelegt ist, in Verwendung die härtende Zusammensetzung auszustoßen.

3. Dynamischer Mischer nach Anspruch 2, wobei das Auslassrohr (7) dazu ausgelegt ist, in Verwendung die härtende Zusammensetzung durch einen primären Abgabeanschluss an einen Haupttank abzugeben.

4. Dynamischer Mischer nach Anspruch 3, wobei der Haupttank mehrere kleiner dimensionierte ortsveränderliche Tanks umfasst, wobei die ortsveränderlichen Tanks jeweils mit einem untergeordneten Abgabeeinlassanschluss verbunden sind.

5. Dynamischer Mischer nach Anspruch 4, wobei die ortsveränderlichen Tanks durch mehrere untergeordnete Abgabeeinlassanschlüsse mit einem primären Abgabeanschluss verbunden sind; und wobei die ortsveränderlichen Tanks in intermittierend erhöhten Höhen angeordnet sein können.

6. Dynamischer Mischer nach einem der vorhergehenden Ansprüche, wobei die Rührvorrichtung ein Antriebssystem umfasst, das ein mechanisches Antriebssystem sein kann und Mittel zum Antreiben eines Rads, wie etwa eine Welle oder einen Mitnehmer, umfassen kann, oder das ein automatisiertes Antriebssystem sein kann.

7. Dynamischer Mischer nach einem der vorhergehenden Ansprüche, wobei der Mischer derart ausgelegt ist, dass in Verwendung das Härtungssystem von dem ersten Pumpmittel durch den ersten Einlassschlauch mit einer Geschwindigkeit von 0,1 bis 0,2 Liter/Minute in die Kammer gepumpt wird und das Harzsystem von dem zweiten Pumpmittel durch den zweiten Einlassschlauch mit einer Geschwindigkeit von 3,4 bis 3,55 Liter/Minute in die Kammer gepumpt wird.

8. Dynamischer Mischer nach einem der vorhergehenden Ansprüche, wobei der Mischer derart ausgelegt ist, dass in Verwendung die härtende Zusammensetzung oder die homogene Zusammensetzung durch das Auslassrohr mit 3 bis 4 Liter/Minute aus der Kammer abgezogen wird.

9. Dynamischer Mischer nach einem der vorhergehenden Ansprüche; wobei der Mischer derart ausgelegt ist, dass in Verwendung das Härtungssystem und das Harzsystem in der Kammer (5) mit einer Verweildauer im Bereich von 40 bis 67 Sekunden gemischt werden, bevor anschließend die homogene Zusammensetzung abgezogen wird.

10. Dynamischer Mischer nach einem der vorhergehenden Ansprüche, wobei der Durchmesser (A) der Rührkammer (5) 125 mm beträgt.

11. Dynamischer Mischer nach einem der vorhergehenden Ansprüche, wobei die Länge (B) der Rührkammer (5) von einem oberen Verschluss zu einer unteren Öffnung der Kammer (5) von 322 bis 378 mm beträgt.

12. Verwendung des dynamischen Mischers nach einem der vorhergehenden Ansprüche zum Mischen mindestens eines Härtungssystems und mindestens eines Harzsystems in einem Verhältnis von mindestens 2,5:100 zum Erhalten einer homogenen härtenden Zusammensetzung.

13. Verfahren zum Erhalten einer homogenen härtenden Zusammensetzung, wobei das Verfahren Folgendes umfasst:
a) Bereitstellen eines dynamischen Mischers nach einem der Ansprüche 1-11;
b) Verwenden des ersten Pumpmittels zum Pumpen mindestens eines Härtungssystems durch den ersten Einlassschlauch mit einer Geschwindigkeit von 0,1 bis 0,2 Liter/Minute zu der Rührkammer;
c) Verwenden des zweiten Pumpmittels zum Pumpen mindestens eines Harzsystems durch den zweiten Einlassschlauch mit einer Geschwindigkeit von 3,4 bis 3,55 Liter/Minute zu der Rührkammer;
d) Mischen des Härtungssystems und des Harzsystems in der Kammer (5) mit einer Verweildauer im Bereich von 40 bis 67 Sekunden; und anschließend
e) Abziehen der resultierenden homogenen Zusammensetzung mit 3 bis 4 Liter/Minute.

## Revendications

1. Mélangeur dynamique (100) conçu pour mélanger au moins un système de polymérisation et au moins un système de résine en une proportion d'au moins 2,5:100 pour obtenir une composition curative homogène, dans lequel ledit mélangeur comprend :
a) une chambre d'agitation (5) pourvue d'un agitateur à moteur (4) suspendu depuis le sommet de la chambre (5) et d'un siphon (6) au fond de la chambre ;
b) au moins un premier tuyau flexible d'entrée (8), dans lequel ledit premier tuyau flexible d'entrée est relié à la chambre d'agitation à une extrémité et est relié à un premier moyen de pompage (2) à l'autre extrémité ; dans lequel le premier moyen de pompage (2) est conçu pour, en utilisation, pomper au moins un système de polymérisation vers la chambre d'agitation par l'intermédiaire de l'au moins un tuyau flexible d'entrée (8) ;
c) au moins un second tuyau flexible d'entrée (9), dans lequel ledit second tuyau flexible d'entrée est relié à la chambre d'agitation à une extrémité et est relié à un second moyen de pompage (3) à l'autre extrémité ; dans lequel le second moyen de pompage (3) est conçu pour, en utilisation, pomper au moins un système de résine vers la chambre d'agitation par l'intermédiaire de l'au moins un tuyau flexible d'entrée (9) ; et
d) un support (1) ;
**caractérisé en ce que**
la proportion entre (A) le diamètre de la chambre d'agitation (5) : (B) la longueur de la chambre d'agitation (5) : (C) la longueur entre l'ouverture inférieure de la chambre (5) et le sommet du siphon (6), est comprise dans le rapport de 1: (2,6-3,0): (1,1-1,3), et
**en ce que**
la longueur (C) entre l'ouverture inférieure de la chambre (5) et le sommet du siphon (6), est comprise entre 138 mm et 162 mm.

2. Mélangeur dynamique selon la revendication 1, dans lequel le siphon (6) a un premier bras (6a) qui est relié à la chambre d'agitation (5) à une première extrémité et dans lequel le siphon (6) a un second bras (6b) qui est relié à un tuyau de sortie (7) à une seconde extrémité, dans lequel ledit tuyau de sortie (7) est conçu pour, en utilisation, évacuer la composition curative.

3. Mélangeur dynamique selon la revendication 2, dans lequel le tuyau de sortie (7) est conçu pour, en utilisation, distribuer la composition curative vers un réservoir maître par l'intermédiaire d'un orifice de distribution principal.

4. Mélangeur dynamique selon la revendication 3, dans lequel le réservoir maître comprend plusieurs réservoirs portables de plus petites dimensions, dans lequel lesdits réservoirs portables sont chacun reliés à un orifice d'entrée de sous-distribution.

5. Mélangeur dynamique selon la revendication 4, dans lequel lesdits réservoirs portables sont reliés par l'intermédiaire de multiples orifices d'entrée de sous-distribution à un orifice de distribution principale ; et dans lequel lesdits réservoirs portables peuvent être disposés à des hauteurs élevées de façon intermittente.

6. Mélangeur dynamique selon l'une quelconque des revendications précédentes, dans lequel l'agitateur a un système d'entraînement, qui peut être un système d'entraînement mécanique, et peut comprendre des moyens destinés à entraîner une roue, comme un arbre ou un dispositif d'entraînement, ou qui peut être un système d'entraînement automatique.

7. Mélangeur dynamique selon l'une quelconque des revendications précédentes, dans lequel le mélangeur est conçu de telle sorte que, en utilisation, le système de polymérisation est pompé dans la chambre par le premier moyen de pompage par l'intermédiaire du premier tuyau flexible d'entrée à une vitesse de 0,1 à 0,2 litre/minute et le système de résine est pompé dans la chambre par le second moyen de pompage par l'intermédiaire du second tuyau flexible d'entrée à une vitesse de 3,4 à 3,55 litres/minute.

8. Mélangeur dynamique selon l'une quelconque des revendications précédentes, dans lequel le mélangeur est conçu de telle sorte que, en utilisation, la composition curative ou la composition homogène est siphonnée hors de la chambre par l'intermédiaire du tuyau de sortie à 3 à 4 litres/minute.

9. Mélangeur dynamique selon l'une quelconque des revendications précédentes, dans lequel le mélangeur est conçu de telle sorte que, en utilisation, le système de polymérisation et le système de résine sont mélangés dans la chambre (5) selon un temps de résidence dans la plage de 40 à 67 secondes avant le siphonnage de la composition homogène.

10. Mélangeur dynamique selon l'une quelconque des revendications précédentes, dans lequel le diamètre (A) de la chambre d'agitation (5) est égal à 125 mm.

11. Mélangeur dynamique selon l'une quelconque des revendications précédentes, dans lequel la longueur (B) de la chambre d'agitation (5) entre une fermeture supérieure et une ouverture inférieure de la chambre (5) est comprise entre 322 mm et 378 mm.

12. Utilisation du mélangeur dynamique tel que défini dans l'une quelconque des revendications précédentes pour mélanger au moins un système de polymérisation et au moins un système de résine en une proportion d'au moins 2,5:100 pour obtenir une composition curative homogène.

13. Procédé d'obtention d'une composition curative homogène, le procédé comprenant :
a) la fourniture d'un mélangeur dynamique selon l'une quelconque des revendications 1 à 11 ;
b) l'utilisation du premier moyen de pompage pour pomper au moins un système de polymérisation vers la chambre d'agitation par l'intermédiaire du premier tuyau flexible d'entrée à une vitesse de 0,1 à 0,2 litre/minute ;
c) l'utilisation du second moyen de pompage pour pomper au moins un système de résine vers la chambre d'agitation par l'intermédiaire du second tuyau flexible d'entrée à une vitesse de 3,4 à 3,55 litre/minute ;
d) le mélange du système de polymérisation et du système de résine dans la chambre (5) selon un temps de résidence dans la plage de 40 à 67 secondes ; puis
e) le siphonnage de la composition homogène résultante à 3 à 4 litres/minute.
